Europäisches Patentamt

European Patent Office

Office européen des brevets

(19)

(11) Publication number:

**0 281 172**
**A1**

## (12) EUROPEAN PATENT APPLICATION

(21) Application number: 88200168.8

(22) Date of filing: 01.02.88

(51) Int. Cl.⁴ **H04N 9/04**

(30) Priority: 10.02.87 NL 8700315

(43) Date of publication of application:
07.09.88 Bulletin 88/36

(84) Designated Contracting States:
BE DE FR GB IT LU NL

(71) Applicant: **ELBICON N.V.**
**Industrieterrein Nieuwland**
**B-3220 Aarschot(BE)**

(72) Inventor: **Dierickx, Bart Marcel Henrietta**
**Ludovicus**
**123, Liersesteenweg**
**B-2510 Mortsel(BE)**

(74) Representative: **Mommaerts, Johan Hendrik,**
**Dipl.-Phys.**
**Octrooibureau Lux Willem Witsenplein 4**
**NL-2596 BK Den Haag(NL)**

(54) **An opto-electric transducer.**

(57) An opto-electric transducer, comprising a matrix
(2) of transducer cells (5A...5D), formed in a semi-
conductor substrate (1), said cells being adapted to
be irradiated for generating therein photo-electric
charges, said cells being arranged in n-columns (5)
and m rows without optically blind regions between
said columns and rows, i.e. with a so-called 100 %
fill factor, means (12) being provided for shifting the
electric charges accumulated in said cells in a mutually separated manner through the respective col-
umns (5) towards an output shift register (3) formed
in said substrate (1) at one side of said matrix (2),
said register (3) beign shielded against radiation and
comprising cells (9) each connected with a cor-
responding matrix column (5), said register (3) being
adapted for removing said charges in a serial man-
ner towards output means (10) for being processed
as electric signals. Said output shift register (3) consists of m rows (7A..7D) of n juxtaposed cells
(9A..9D), and is provided with charge transfer means
(8A..8D) allowing to shift charges from said n columns (5) of said matrix (2) in the column direction
into corresponding cells (9) of said rows (7A..7D),
and, subsequently, to shift said charges in the perpendicular direction in the rows (7A..7D) in question
towards m different outputs (10A...10D).

FIG. 1.

# An opto-electric transducer.

The invention relates to an opto-electric transducer, which is, in the first place, intended for being used in a line scanner for scanning, for example, objects moved on a conveyor belt, the quality of which is to be examined, which objects are, then, irradiated by means of a light line which is directed transversely to the direction of movement, and the light remitted by said objects is directed towards a transducer. The invention is, however, not restricted to this use.

Opto-electric picture transducers are known which comprise a matrix of transducer cells formed in a semi-conductor substrate, said cells being adapted to be irradiated for generating therein photo-electric charges, said cells being arranged in n columns and m rows without optically blind regions between said columns and rows, i.e. with a so-called 100 % fill factor, means being provided for shifting the electric charges accumulated in said cells in a mutually separated manner through the respective columns towards an output shift register formed in said substrate at one side of said matrix, said register being shielded against radiation and comprising cells each connected with a corresponding matrix column, said register being adapted for removing said charges in a serial manner towards output means for being processed as electric signals.

Such a matrix of transducer cells, working in the column direction as a shift register, and in which each column acts as a series connection of field-effect transistors with a buried channel, is known. Therein the charges are to be introduced into the output shift register row by row, and are to be shifted, in the latter, in series towards the output before the charges of a next row can be introduced. A draw-back thereof is that the output duration is k times the shift duration in the output register, during which time the charges can change which disturbs the measurement, and, moreover, the measurement data appear as series succeeding each other in time, which, for processing the radiation distribution in the matrix in respect of the rows, are to be brought again in the parallel form. It is true that the former objection can be reduced by increasing the shift velocity in the output register, but this only up to a certain limit.

The invention provides an opto-electric transducer of the kind mentioned above by means of which these draw-backs can be removed.

To that end the transducer according to the invention is characterised in that said output shift register consists of m rows of n juxtaposed cells, and is provided with charge transfer means allowing to shift charges from said n columns of said matrix in the column direction into corresponding cells of said rows, and, subsequently, to shift said charges in the perpendicular direction in the rows in question towards m different outputs.

In particular the transducer according to the invention is characterised in that each cell if said matrix is provided with k electrodes subdividing each cell into partial cells, by means of which, by applying suitable control voltages, a potential distribution can be generated in said substrate so that the produced charge is retained in one or more partial cells, and is kept separated from adjacent charges by other partial cells, and, when varying the potential distribution by a cyclic variation of said control voltages at said electrodes, said charges can be shifted towards adjacent cells in a mutually separated manner, the corresponding electrodes of the various columns being interconnected for effecting, in all columns, a simultaneous charge shift, and in that the m juxtaposed rows of each n cells of said output register are separated from said matrix and from each other by m intermediate regions, which, with the exception of transfer windows, are insulated from said rows, which intermediate regions are provided with transfer electrodes which are coupled mutually and with the transfer electrodes of the matrix, which m rows are provided with corresponding series of interconnected k' electrodes, in which the control voltages are cyclically applied to said series of k' electrodes and to said transfer electrodes in such a manner that a charge shifted from the last cell of a matrix column by the first transfer electrode through a transfer window is taken in a first partial cell of the first row, is subsequently shifted towards an adjacent partial cell, said charge then being transferred by means of the adjacent transfer electrode and a transfer window, towards the adjacent intermediate region, and, through a second window, towards the first partial cell of the second row, the first partial cell of the first row then receiving a subsequent charge from the matrix column, which is continued until the m charges are transferred from the columns in the corresponding cells of the m output register rows, whereafter the electrodes of these m rows are being cyclically and simultanelously controlled in such a manner that said charges are simultaneously shifted towards the m corresponding outputs of the output register in order to be subsequently processed.

The plural output shift register allows a charge shift in two mutually perpendicular directions, and said charges may be changed only during the transfer of the charges from the matrix columns towards the output register, but this period is relatively short, and the period needed for shifting in the rows of the output register is, then, completely available for building up the charges serving for the measurement in the matrix cells. Moreover the signals of the various matrix columns will now simultaneously appear at the output of the output register, which simplifies the processing thereof, in particular if the charges within the various columns are to be mutually compared.

The latter will, for example, be the case if at least a part of the transducer cell rows of the matrix is covered with a colour filter which is different for the various rows, the cells of a column being irradiated with the same light spot to be examined, in order to enable the colour thereof to be determined, and then the number of cells per column and the colour of the various filters will be adapted to said colour determination.

For a complete colour determination three or four rows in the matrix will be sufficient if the measurement is to take place in one light line, for instance when scanning objects moved by a conveyor belt which are to be examined on colour deviations, in which case the light line is focussed by means of a lens on the matrix. It will be clear that the number of colour filters to be used will, then, depend on the character of the colours or colour differences to be detected, and the number of cells in a row will be determined by the width of the region to be scanned, the imaging region used, and the desired resolution. If, for instance, cells with dimensions of 24 x 24 $\mu$m are used, in a matrix with n = 1024 and a reduction of 40 : 1, a region with a width of 1 m can be scanned, the resolution then being 1 mm.

The electrodes provided on the matrix generally consist of polysilicon having an absorption in the blue spectral region, so that it will, sometimes, be advisable to arrange the matrix cells in question at the end of the columns opposite to the output register, and to provide, there, a gap between the electrodes so as to improve the transmittance for blue light.

In particular a conductive layer shielded against radiation can be provided at the side of the matrix opposite to the output register, said layer allowing, by adjusting the voltage at a part of the electrodes of the matrix region, to remove a part of the charge from the adjacent cell, in order to restrict the charge accumulation up to a given maximum or duration. This can be necessary, for instance, if said cell receives a stronger radiation than the other cells, and/or charge will flow over from neighbouring cells.

The invention will be elucidated below in more detail be reference to a drawing; showing in:

Fig. 1 a highly simplified plan view of a transducer according to the invention; and

Figs. 2 and 3 a diagrammatic cross section according to the line II - II of Fig. 1 and, respectively, a diagrammatic plan view thereof.

The transducer according to the invention comprises a silicon substrate 1, e.g. of p-type Si, which, as will be described below in more detail, consists of a matrix portion 2 and an output register portion 3.

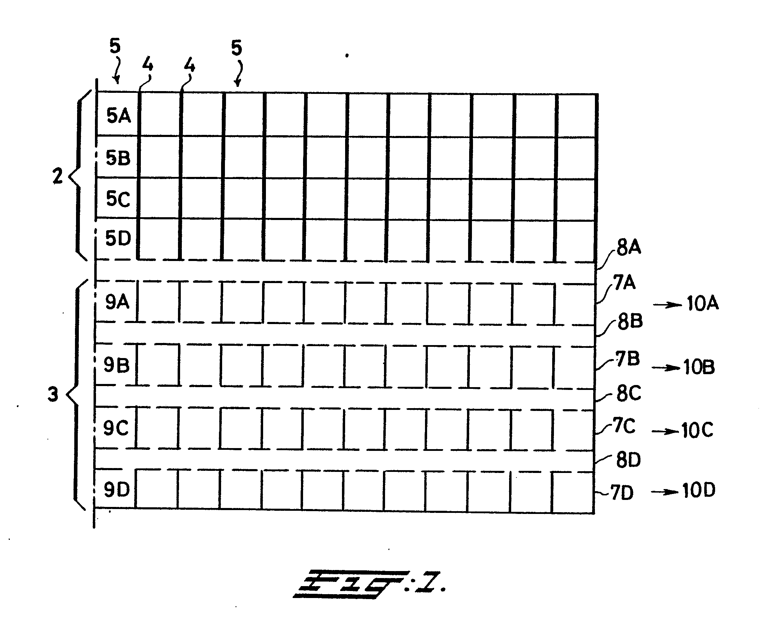

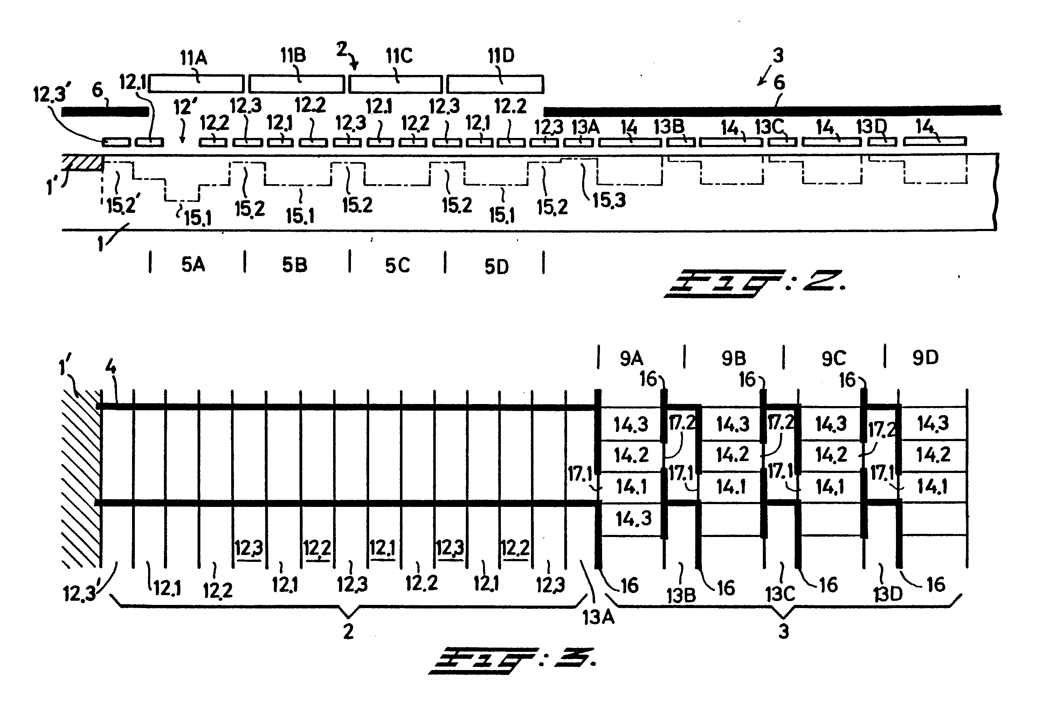

The matrix portion 2 is subdivided, by means of narrow insulating regions 4, into columns 5, which are mutually electrically insulated. Each column 5 consists of m (in the present case four) cells 5A..5D. The matrix portion 2 is, at its upper side, transmittant for radiation, and in particular for light, in order to allow photo-electrons to be released in the various cells, and to obtain a charge accumulation therein corresponding to the radiation dose. All the remaining portions of the substrate 2 are covered with an opaque layer 6 (see Fig. 2).

The output register portion 3 comprises m, therefore four in the present case, rows of cells 7 which are separated by means of intermediate regions 8A..8D from the matrix portion 2 and, respectively, from each other. The rows 7 are subdivided in a manner to be described below into cells 9A, B, C and D resp., respective series of cells 9A..9D being aligned with a matrix column 5.

It is, now, the object to transfer the charges in the cells 5A..5D of a matrix column towards the corresponding cells 9A..9D of the ouput register 4, and, subsequently, to control the discrete rows 7 of this matrix portion as a charge shift register for shifting said charges towards the respective outputs 10A..10D of said shift register 3. This can take place during the period that, in the cells 4 of the matrix portion 2, charges are being accumulated, and transferring said charges towards the cells 9 of the output register portion 3 can take place quickly.

The operation of this transducer will now be described by reference to an embodiment shown in more detail in Figs. 2 and 3, and considering the case that a light line impinges on this matrix portion 2, having a lengt corresponding to n cells of said matrix, and a width corresponding to the length of a column 5. This light line is, for instance, formed on the matrix by means of a lens, and then, on the matrix portion 2, a reduced image of an object plane scanned by a light line is produced. This object plane is, for instance, formed by a conveyor belt on which objects are situated, the colour of which is to be determined. The image ratio of the lens is then adapted to the width of the conveyor belt, and a number of cells n of the matrix will be chosen, dependent on the image ratio, in such a manner that the desired resolution is obtained.

The cells 5A..5D of the matrix portion 2 are, as shown in Fig. 2, covered by colour filters 11A..11D, each ex tending over a complete row, which filters are mutually different. The number of filters depends on the desired spectral measurement. Sometimes it will be sufficient to use a smaller number of colour filters, and also one of the filters can be absent in order to provide a total light-intensity measurement.

On the surface of the substrate 1 light transmitting electrodes 12.1..12.3 are provided, e.g. made of polysilicon, each extending over a complete row length, and each being connected with a source of a corresponding control voltage. Each filter 11A..11D defines a cell 5A..5D resp., and in each cell two electrodes 12.1 and 12.2 are present, the electrodes 12.3 each bridging the boundaries between two cells. Above the intermediate regions 8 of the output register portion 3 additional electrodes 13A..13D resp. are present which, as well, extend over the full length of the substrate 1. Above the output register rows 7 electrodes 14 are present too, as will be discussed in more detail below.

In the condition in which the charges are to be accumulated in the cells 5A..5D, such voltages will be applied to the electrodes 12 that, in the n-type region of the substrate 1 a potential distribution will be obtained which is diagrammatically indicated by a line 15. This distribution is so that below the electrodes 12.1 and 12.2 a potential well 15.1 is produced in which the generated photo-electrons are collected, which charges are retained below the electrodes 12.3 by the potential 15.2. Below the electrode 13A a potential barrier 15.3 is present too which, as the case may be, can be higher than the adjacent barrier 15.2.

In order to transfer the collected charges towards the output register portion 3, the potential well 15.1 is narrowed to a narrower well below the electrodes 12.3 by changing the voltage at the electrodes 12.1, and thereafter the voltage at the electrodes 12.3 is varied so that, there, a well is formed again, so that the charges can move to the right. This is repeated so that the potential wells are alternately narrowed and widened, and all the charges are shifted towards the right in a mutually separated manner. As will be described below also the voltages at the electrodes 13A..13D will be varied so that the charges can be shifted towards the output register portion 3. This manner of transferring charges is known. If desired also a larger number of electrodes 12 can be used if this is favourable. It is not necessary to describe this in more detail.

Below the filter 11A and between the electrodes 12.1 and 12.2 an aperture 12′ is left open. The polysilicon electrodes 12 are, in fact, rather opaque for blue light. In this manner the cell below the filter 11A (if this is a blue filter) can be made reasonably sensitive for blue. It is true that, then, the charge shift effect of this cell will not be optimal, but this is not very objectionable since this cell is the most remote one in respect of the output register, so that no charges of preceding cells are to be shifted thereby.

As follows from Fig. 3, the rows 7 and the intermediate regions 8 of the output register portion 3 are separated again by insulating strips 16, which as in the case of the strips 4 form an insulation between the respective regions. In these strips 16 apertures or windows 17.1 and 17.2 are formed allowing transfer of charges.

As shown in Fig. 3, above the cells 9A..9D of the output register rows 7 repetitive groups of electrodes 14.1, 14.2 and 14.3 are formed again, and all the electrodes with the same reference numeral are interconnected. Above the intermediate regions 8 the continuous transfer electrode 13A and, respectively, the transfer electrodes 13B, 13C and 13D connected with the former electrodes are arranged.

If a potential well 15.1 in Fig. 2 is shifted towards the right, and, by a variation of the voltage at the electrode 13A, has arrived in the first intermediate region 8, the voltage at the electrode 14.1 of the first row 7 joining the window 17.1 is changed in such a manner than the charge present below the electrode 13A can flow off through the window 17.1 towards the region below the electrode 14.1. The voltage at the adjacent electrodes 14.2 and 14.3 is so that, again, a potential well is defined therebetween. The voltage at the electrodes 13 will, then, be varied again in such a manner that the potential well therebelow will disappear, so that the charge will be present completely below the electrode 14.1.

As has been described for the electrodes 12, the voltages at the electrodes 14.1, 14.2 and 13 are varied so that the potential well, and therefor the charge, will arrive below the electrode 14.2; the electrode 14.3 is kept at such a voltage that this electrode will not take part in the charge transfer. By varying the voltage at the electrodes 13, the charge can flow off then through the window 17.2 towards the adjacent intermediate region 8. In the meantime also a next charge has arrived below the electrode 13A, so that this charge can flow off through the window 17.1 towards the portion below the electrode 14.1, as soon as the voltage at the latter has changed, and, simultaneously, the charge below the electrode 13B can flow off towards the portion below the electrode 14.1 of the next row 7. In this manner the various charges of the cells 5A..5D are transferred towards the corresponding cells 9A..9D of the register portion 3.

As soon as this has taken place, the cells 9A..9D are being kept mutually separated by keeping the electrodes 13A..13D at the correct control voltage, and the voltages at the electrodes 14.1..14.3 are varied cyclically in such a manner that the charges collected in the various cells 9A..9D are shifted towards one side of the register portion 3, so that, then n, in the present case four, simultaneous signal series appear at the output 10A..10D resp.

In this manner an output register portion 3 is obtained in which the charge shift in two mutually perpendicular directions is possible, and this for mutually separately taking up charges from the cell 5, and, subsequenly, simultaneously transferring said charges towards the output. The first shift can take place very quickly, so that possible charge losses by the continued irradiation will be kept as small as possible. For outputting said charges a longer time is available then, which serves for collecting charges in the cells 5A..5D.

The simultaneous series of signals thus obtained at the output 10A..10D can be mutually compared per column in a simple manner for performing olour computing operations, and for deriving therefrom the colour of the light incident on a column, in particular of colour deviations in respect of a standard colour. This can be used, for instance, for a quality check of, for instance, beans, fruit or the like, in which colour deviations, spots forming an indication of attack or the like, can be detected. The resolution should, of course, be adapted to the size of the objects to be examined.

Sometimes it can be favourable to restrict the charge collection in a cell 5 of the matrix portion 2. This is indicated in Fig. 2 for the cell 5A. To the left of said cell a $n^+$-type region 1′ is present in the substrate 1, which region serves as a charge sink. If a suitable control voltage is applied to the electrode 12.3′ (and, if required, also to the next electrode 12.3 or further electrodes), the charge collected below the filter 11A (and, as the case may be, 11B) will flow off directly towards the region 1′. In these cells the charge collection can, in fact, only begin when the aforementioned control voltage at the electrode 12.3′ (or, as the case may be, 12.3) has been removed again. This means, in fact, a shortening of the irradiation period in comparison with the other cells.

Although in the preceding has been made to cells 15A..15D provided with different colour filters, it will be clear that an output register 3 of the kind described above can also be used if the matrix portion 2 receives different image points also in the column direction, said points forming a part of a two-dimensional image. The number of cells of each column, and therefore also the number of rows 7 of the matrix portion 2, should, of course, be adapted to the dimension in question of the image then.

## Claims

1. An opto-electric transducer, comprising a matrix of transducer cells formed in a semiconductor substrate, said cells being adapted to be irradiated for generating therein photo-electric charges, said cells being arranged in n-columns and m rows without optically blind regions between said columns and rows, i.e. with a so-called 100 % fill factor, means being provided for shifting the electric charges accumulated in said cells in a mutually separated manner through the respective columns towards an output shift register formed in said substrate at one side of said matrix, said register being shielded against radiation and comprising cells each connected with a corresponding matrix column, said register being adapted for removing said charges in a serial manner towards output means for being processed as electric signals, characterised in that said output shift register (3) consists of m rows (7A..7D) of n juxtaposed cells (9A..9D), and is provided with charge transfer means (8A..8D) allowing to shift charges from said n columns (5) of said matrix (2) in the column direction into corresponding cells (9) of said rows (7A..7D), and, subsequently, to shift said charges in the perpendicular direction in the rows (7A..7D) in question towards m different outputs (10A..10D).

2. The transducer of claim 1, characterised in that each cell (5) of said matrix (2) is provided with k electrodes (12) subdividing each cell (5) into partial cells, by means of which, by applying suitable control voltages, a potential distribution (15) can be generated in said substrate (1) so that the produced charge is retained in one or more partial cells, and is kept separated from adjacent charges by other partial cells, and, when varying the potential distribution (15) by a cyclic variation of said control voltages at said electrodes (12), said charges can be shifted towards adjacent cells in a mutually separated manner, the corresponding electrodes (12) of the various columns (5) being interconnected for effecting, in all columns (5), a simultaneous charge shift, and in that the m juxtaposed rows of each n cells (9) of said output register (3) are separated from said matrix (2) and from each other by m intermediate regions (8), which, with the exception of transfer windows (17), are insulated from said rows (7), which intermediate regions (8) are provided with transfer electrodes (13B, 13C, 13D) which are coupled mutually and with the transfer electrodes (13A) of the matrix (2), which m rows (7) are provided with corresponding series of interconnected k′ electrodes (14), in which the control voltages are cyclically applied to said series of k′ electrodes (14) and to said transfer electrodes (13) in such a manner that a charge shifted from the last cell (5D) of a matrix column (5) by the first transfer electrode (13A) through a transfer window (17.1) is taken in a first partial cell of the first row (7A), is subsequently shifted towards an adjacent partial cell, said charge then being transferred, by means of the adjacent transfer electrode (13B) and a transfer window (17.2), towards the adjacent intermediate region, and, through a second window, towards the first partial cell of the second row (7B), the first partial cell of the first row (7A) then receiving a subsequent charge from the matrix column (5), which is continued until the m charges are transferred from the columns (5) in the corresponding cells (9) of the m output register rows (7), whereafter the electrodes (14) of these m rows (7) are being cyclically and simultaneously controlled in such a manner that said charges are simultaneously shifted towards the m corresponding outputs (10) of the output register (3) in order to be subsequently processed.

3. The transducer of claim 1 or 2, <u>characterised</u> in that at least a part of the transducer cell rows (5) of the matrix (2) is covered with a colour filter (11) which is different for the various rows (5), the cells of a column (5) being irradiated with the same light spot to be examined, in order to enable the colour thereof to be determined, the number of cells per column (5) and the colour of the various filters (11) being adapted to said colour determination.

4. The transducer of claim 3, in which the electrodes of the matrix region show a colour absorption, <u>characterised</u> in that the corresponding matrix cells (5A) are provided at the end of the columns (5) opposite to the output register (3), and in that, there, an aperture (12') is present between the electrodes (12) in order to improve the transmittance for the colour in question.

5. The transducer of any one of claims 1..4, <u>characterised</u> in that a layer (11) shielded against radiation is provided at the side of the matrix (2) opposite to the output register (3), said layer allowing, by adjusting the voltage at a part of the electrodes (12) of the matrix region (2), to remove a part of the charge from the adjacent cell (5A), in order to restrict the charge accumulation upto a given maximum or duration.

*Fig.1.*

0 281 172

Fig. 2.

Fig. 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | OPTICAL ENGINEERING, vol. 20, no. 6, November/December 1981, pages 873-880, Bellingham, Washington, US; R.A.SPRAGUE. et al.: "High resolution multispectral linear focal plane using an area image sensor" * Page 876, right-hand column, line 36 - page 877, left-hand column, line 33; figures 6,7 * | 1,2,3 | H 04 N   9/04 |
| A | EP-A-0 077 003  (HITACHI LTD.) * Page 10, line 17 - page 11, line 15; figure 4 * | 1,2,3 | |
| A | US-A-4 001 878  (WEIMER) * Column 2, line 35 - column 3, line 58; figure 1 * | 1,2,3 | |
| | | | TECHNICAL FIELDS SEARCHED (Int. Cl.4) |
| | | | H 04 N   9 H 04 N   3 |

The present search report has been drawn up for all claims

| Place of search | Date of completion of the search | Examiner |
|---|---|---|
| THE HAGUE | 17-05-1988 | BEQUET T.P. |

EPO FORM 1503 03.82 (P0401)